# FASCICULE DE BREVET EUROPEEN

(11) **EP 0 545 766 B1**
(45) Date de publication et mention de la délivrance du brevet: **16.07.1997**
(21) Numéro de dépôt: 92403139.6
(22) Date de dépôt: 20.11.1992
(51) Int. Cl.: C21C 5/00, C22B 1/242, C22B 1/248

(54) **Procédé de préparation d'un agent refroidissant contenant du fer pour convertisseur d'aciérie et agent refroidissant obtenu par ce procédé**
Verfahren zum Herstellen eines eisenhaltigen Kühlmittels für die Stahlerzeugung im Konverter und nach diesem Verfahren hergestelltes Kühlmittel
Ferruginous coolant producing method for steel making in converters and so produced coolant

(30) Priorité: 26.11.1991 FR 9114590
(43) Date de publication de la demande: 09.06.1993
(73) Titulaire: SOLLAC, F-92800 Puteaux (FR)
(72) Inventeur: Audebert, Serge, F-30127 Bellegarde (FR); Audibert, Francis, F-13310 Saint Martin de Crau (FR)
(74) Mandataire: Lanceplaine, Jean-Claude

(56) Documents cités:
- DD-A- 69 621
- DD-A- 252 393
- DE-A- 3 923 552
- DE-A- 4 101 584
- DE-C- 2 942 899
- US-A- 4 326 883
- US-A- 4 369 062
- US-A- 4 585 475
- STAHL UND EISEN vol. 104, no. 7, 2 Avril 1984, DUSSELDORF DE pages 357 - 362 W. KAAS ET AL.
- PATENT ABSTRACTS OF JAPAN vol. 3, no. 27 (C-39)(138) 7 Mars 1979 & JP-A-54 004 214 (SUMITOMO KINZOKU) 12 Janvier 1979

## Description

La présente invention a pour objet un procédé de préparation d'un agent refroidissant contenant du fer pour l'affinage de l'acier dans un convertisseur d'aciérie.

La présente invention a également pour objet un agent refroidissant contenant du fer élaboré par ce procédé.

Dans les usines sidérurgiques intégrées, les opérations de laminage et notamment de laminage à chaud nécessitent l'utilisation d'huile de lubrification ainsi que d'eau de refroidissement.

L'huile imbrûlée et la calamine se mélangent et sont entraînées par l'eau de refroidissement vers les filtres à sable placés dans le circuit de récupération d'eau.

Lorsque ces filtres sont trop encrassés, on les lave à contre-courant avec de l'eau, produisant ainsi des boues grasses de laminoirs dans lesquelles les résidus contenant du fer sont pollués par les hydrocarbures provenant de l'huile.

Ces boues grasses que l'on récupère à raison de 1000 tonnes par mois dans certaines aciéries, sont stockées dans une lagune et ne sont jamais utilisées.

De plus, ces boues grasses s'infiltrent au cours du temps dans le sol et polluent les nappes phréatiques.

Compte tenu des inconvénients inhérents au stockage des boues grasses de laminoirs et à la non utilisation de ce produit contenant du fer, la demanderesse a procédé à de nombreux essais de revalorisation et a découvert que ces boues peuvent être utilisées dans un convertisseur d'aciérie en tant qu'agent refroidissant, après avoir subi un traitement approprié.

JP-A-54-4214 divulgue des boulets pour le chargement dans un convertisseur, ces boulets étant préparés à partir d'un mélange de boues grasses de laminoirs, de chaux et d'un liant.

La présente invention a ainsi pour objet un procédé de préparation d'un agent refroidissant contenant du fer, caractérisé en ce que ledit agent est formé de boulets élaborés à partir de boues grasses de laminoirs et en ce que :
- on ajoute aux boues grasses de laminoirs extraites, de la chaux, du minerai de fer, des scories et des fibrilles métalliques afin d'obtenir un mélange dont la composition pondérale est la suivante :
   . boues grasses : 55 à 93%
   . chaux : 5 à 25%
   . fibrilles métalliques : 5 à 15%
   . minerai de fer: 1 à 15%
   . scories : 1 à 15%
- on laisse reposer ledit mélange sous abri en vue de l'extinction de la chaux,
- on homogénéise le mélange obtenu,
- on ajoute 4 à 10% de liant,
- et on compacte ledit mélange pour former les boulets.

Selon d'autres caractéristiques de l'invention :
- les boulets ont une forme générale d'ellipsoïdes de longueur comprise entre 20 et 60mm et d'épaisseur comprise entre 10 et 25 mm,
- les fibrilles métalliques ont une longueur maximale d'environ 5mm et un diamètre moyen d'environ 0,3mm,
- les fibrilles métalliques sont des copeaux issues d'opérations d'usinage telles que le meulage,
- les fibrilles métalliques contiennent du fer,
- la composition pondérale du mélange est de préférence la suivante :
   . boues grasses : 76 à 80%
   . chaux : 10 à 12%
   . fibrilles métalliques : 7 à 12%
   . minerai de fer : 1 à 6 %
   . scories : 1 à 6 %

La présente invention a également pour objet un agent refroidissant contenant du fer élaboré par le procédé mentionné ci-dessus, caractérisé en ce qu'il contient en poids :
- au moins 50% à 67% de fer
- de 8 à 18% de chaux
- moins de 0,2% de soufre
- moins de 7% de carbone
- moins de 10% de résiduels sous forme alcaline et minérale, le fer étant présent sous forme libre et sous forme d'oxydes.

La description qui va suivre, donnée à titre d'exemple non limitatif, va permettre de mieux comprendre l'invention et de faire ressortir les avantages et les caractéristiques de l'invention.

Dans un convertisseur d'aciérie, on procède à l'affinage de l'acier afin de produire un acier brut de caractéristiques peu dispersées autour des valeurs visées, c'est à dire des valeurs limites pour les teneurs en impuretés telles que le phosphore ou le soufre par exemple, une température minimale compatible avec la mise à nuance et une température de coulée en machine de coulée continue et par ailleurs, une teneur en carbone.

Lorsque la fonte liquide et la ferraille sont chargées dans le convertisseur, on insuffle pendant plusieurs minutes environ 15000m³ d'oxygène au moyen d'une lance de soufflage en vue de l'élaboration de l'acier.

Au début de la phase d'insufflation d'oxygène, on enfourne la chaux qui va réagir avec l'oxygène et avec les éléments présents dans la fonte tels que par exemple le silicium, le phosphore et le manganèse afin de former des scories ou encore ce que l'on nomme le laitier de convertisseur.

Après l'enfournement de la chaux, on réalise l'enfournement par gravité d'un agent refroidissant qui est traditionnellement un minerai dit de soufflage contenant environ 67% de fer sous forme d'oxydes et qui participe au bilan énergétique de l'affinage.

Le procédé conforme à l'invention consiste à préparer un agent refroidissant contenant du fer formé de boulets élaborés à partir de boues grasses de laminoirs.

Cet agent est destiné à se substituer partiellement au minerai de soufflage traditionnel et il est prévu par exemple de remplacer 3 tonnes de minerai par 4,5 tonnes d'agent selon l'invention afin de satisfaire au bilan énergétique et d'obtenir une composition et une température d'acier déterminées.

Le carbone libre sous forme d'hydrocarbure doit être présent dans l'agent dans des proportions ne dépassant pas 7%, afin d'écarter le risque de transformation des atomes d'hydrogène des chaînes d'hydrocarbure provenant des boues grasses de laminoirs en molécules de gaz.

En effet, la présence d'un volume gazeux d'hydrogène dans le convertisseur et donc dans le conduit de captage disposé au-dessus peut provoquer des explosions d'une puissance considérable.

L'agent de refroidissement contenant du fer selon la présente invention est élaboré à partir des boues grasses de laminoirs stockées dans une lagune.

La première étape du procédé de fabrication consiste à extraire ces boues et à y incorporer des adjuvants qui vont les transformer et leur donner des propriétés spécifiques.

Ainsi, on ajoute de la chaux vive, par exemple, afin de sécher les boues et de les déshuiler.

Le rôle de la chaux est de ramener le taux d'humidité à environ 4 à 5% maximum.

Etant donné que la réaction chimique est exothermique, la température étant voisine de 80°C, une fraction des hydrocarbures est ainsi éliminée par évaporation, l'autre fraction étant fixée sur la chaux.

Un excès de chaux peut occasionner l'éclatement des boulets de l'agent contenant du fer empêchant ainsi fortement la pénétration dudit produit dans le bain liquide du convertisseur, ce qui a pour effet de perturber l'élaboration de l'acier en aboutissant à un acier de température plus élevée que prévu.

A cet effet, il convient de ne pas ajouter plus de 25% de chaux.

En dessous de 5%, le déshuilage partiel et l'ajout de chaux devient inefficace.

On ajoute également 1 à 15% de minerai de fer, de préférence 1 à 6% , sous la forme d'une poudre dont le spectre granulométrique est inférieur à 5mm dans sa totalité ainsi que 1 à 15%, de préférence 1 à 6%, de scories issues du convertisseur et retraitées.

Les scories sont des fines de taille inférieure à 3,14mm.

Le mélange ainsi formé contient 55 à 93% , de préférence 76 à 80%, de boues grasses en masse pondérale.

La demanderesse a par ailleurs constaté que des boulets élaborés à partir de boues grasses de laminoirs, de chaux et éventuellement de minerai de fer et de scories ne possédent pas une cohésion suffisante.

De ce fait, lors de l'enfournement des boulets au convertisseur, ceux-ci sont en contact d'une chaleur intense, la température régnant dans l'enceinte du convertisseur avoisinant 1500°C, et par un manque de cohésion se désagrègent avant leur entrée dans le bain de fonte liquide en produisant une quantité considérable de fines.

Les fines sont alors aspirées dans le conduit de captage et se déposent sur les parois dudit conduit, provoquant ainsi un encrassement de celui-ci.

Ces fines aspirés représentent également une part non négligeable d'agent refroidissant qui ne participe pas au bilan énergétique du convertisseur et qui n'a donc aucune efficacité thermique.

A cet effet, la demanderesse a découvert de manière surprenante que l'ajout de 5 à 15% et de préférence de 5 à 12% de fibrilles métalliques au mélange précédemment cité confère aux boulets une meilleure cohésion et permet de diminuer d'environ 30% la proportion de fines dans les boulets retardant ainsi la désagrégation desdits boulets lors de leur enfournement dans le convertisseur. Les fibrilles métalliques ont une longueur maximale d'environ 5mm et un diamètre moyen d'environ 0,3 mm.

En effet, pour des dimensions supérieures à celles précédemment mentionnées, on constate que les boulets ne présentent plus la cohésion recherchée.

Ces fibrilles sont des copeaux métalliques issus d'opération d'usinage comme par exemple le meulage et peuvent contenir du fer.

Ces copeaux métalliques contenant du fer sont par exemple en acier inoxydable, mais ils peuvent également être en acier d'un tout autre type comme par exemple de l'acier doux.

Le métal choisi ne se limite pas à l'acier et peut par exemple être de l'aluminium ou tout autre métal.

Le mélange obtenu est ensuite laissé au repos sous abri pendant environ une semaine. Cette étape a pour fonction d'éteindre la chaux et intervient également par l'augmentation de la résistance mécanique du mélange au cours du temps.

Ce temps de repos est variable, selon les teneurs utilisées dans le mélange, de quelques jours jusqu'à trois semaines.

Lorsque le mélange est reposé, on procède à son homogénéisation dans une malaxeuse.

L'avant dernière étape concerne l'addition de liant dans des proportions comprises entre 4 à 6% et de préférence égales à 5%.

Comme liant, on choisit de la mélasse de canne qui agit sur le mélange en créant des liaisons liquides mobiles puis, après séchage, des ponts solides qui collent les grains dudit mélange entre eux.

Le liant contribue ainsi à améliorer la résistance mécanique de l'agent refroidissant.

Après séchage, le mélange contient moins de 2% d'eau.

Des liants tels que le lignosulfonate d'ammonium et le lignosulfonate de calcium peuvent aussi être utilisés.

La mise en forme de l'agent refroidissant contenant du fer selon la présente invention constitue la dernière étape de sa fabrication et a lieu dans une presse à compactage sous une pression de 400 à 500 bars.

On forme ainsi des boulets qui ont la forme d'ellipsoïdes dont les dimensions sont telles que la longueur est comprise entre 20 et 60mm et l'épaisseur est comprise entre 10 et 25mm.

La forme retenue pour l'agent refroidissant est la plus adaptée pour son acheminement vers le convertisseur.

En effet, lorsque l'agent refroidissant est acheminé vers le convertisseur à l'aide de bandes transporteuses, celles-ci sont souvent inclinées si bien qu'un agent refroidissant élaboré sous la forme de sphères ne convient pas.

Il convient également de noter qu'un agent refroidissant élaboré sous la forme de briquette ou parallélépipède n'est pas davantage adapté à cet acheminement compte tenu du fait qu'il présente des arêtes vives supportant mal les chocs et qu'il s'émiette assez facilement lors du transport vers le convertisseur ce qui n'est pas le cas des boulets très compacts de la présente invention.

La taille des boulets, leur densité et leur résistance mécanique permettent lors de leur enfournement dans le convertisseur, de pénétrer facilement dans le bain liquide, favorisant ainsi la réaction avec le métal liquide.

La résistance mécanique des boulets s'est d'ailleurs fortement accrue avec l'adjonction des fibrilles métalliques.

En effet, la demanderesse a pu constater que les boulets élaborés sans fibrilles métalliques présentaient une résistance mécanique à la compression de l'ordre de 25 Kgf alors que ceux élaborés avec lesdites fibrilles métalliques présentaient une résistance mécanique à la compression de l'ordre de 85 Kgf.

L'agent refroidissant contenant du fer selon la présente invention possède par exemple la composition chimique suivante :
- 52% de fer sous forme libre et oxydée
- 9,8% de chaux
- 0,08% de soufre
- 6,5% de carbone
- le reste étant constitué de moins de 10% de résiduels sous forme alcaline et minérale.

Il convient de noter que la teneur en soufre doit être inférieure à 0,2% en raison du fait que les sidérurgistes éprouvent des difficultés à se débarrasser d'un excès de soufre dans l'acier au convertisseur.

La présente invention permet donc de revaloriser les résidus contenant du fer présents dans les boues grasses de laminoirs stockées dans la lagune depuis de nombreuses années, ainsi que celles produites quotidiennement sur les trains de laminoirs.

L'enlèvement de ces boues de la lagune élimine par ailleurs les risques de pollution des nappes phréatiques.

En plus de ces avantages, l'invention permet de réaliser l'affinage dans les meilleurs conditions économiques possibles en diminuant le coût de l'enfournement en minerai au convertisseur.

Des essais ont été réalisés sur des boulets sans fibrilles et avec fibrilles pour quantifier l'incidence de l'ajout desdites fibrilles sur la proportion en fines desdits boulets.

On a tout d'abord élaboré des boulets notés A et formés à partir de la composition suivante, selon le procédé précédemment décrit, sans adjonction de fibrilles :
- boues grasses 77,1%
- chaux 10,5%
- minerai de fer 4,2%
- scories 4,2%
- liant 4%
puis, on a élaboré des boulets noté B par adjonction de 10% de fibrilles au mélange précédent. Ces fibrilles sont des copeaux d'acier inoxydable de longueur maximale égale à 5mm et de diamètre moyen égal à 0,3mm, issus d'une opération de meulage.

Le nouveau mélange a donc la composition suivante :
- boues grasses 70%
- chaux 9,2%
- fibrilles 9,2%
- minerai de fer 3,8%
- scories 3,8%
- liant 4%

Dans chacun des deux cas précités A et B, 150 kg de boulets de 60 mm de long et 25mm d'épaisseur ont été élaborés.

Pour chaque cas A et B, on procède à un test appelé test MICUM sur 15kg d'agent refroidissant.

Un tel test a pour but de mesurer la génération de fines lors du passage des boulets sur un tambour MICUM.

Ce tambour simule la dégradation subie par la matière au cours des différentes manutentions.

Le test MICUM est effectué selon une norme ISO et consiste successivement pour chaque cas A et B à:
- déposer 15kg d'agent refroidissant élaboré sous la forme de boulets sur une roue munie d'une cornière périphérique de 50mm de largeur et tournant à une vitesse de 200 tours par minute pendant cinq minutes. Au cours de la rotation de la roue une partie des boulets se désagrège et est récupérée dans la cornière,
- recueillir les boulets restants et la partie désagrégée récupérée dans la cornière et à les tamiser de manière classique sur des tamis à mailles circulaires de diamètres successifs 60, 40, 20, 10, 5 et 3,14mm.

Ce test a pour but d'obtenir le spectre granulométrique des boulets et donc d'évaluer la quantité de fines présente dans lesdits boulets.

Ainsi après le premier test, on obtient les résultats consignés dans le tableau 1 suivant :

**TABLEAU 1**

| SPECTRE GRANULOMETRIQUE | | PROPORTIONS EN POIDS | |
|---|---|---|---|
| | | Cas A | Cas B |
| | < 3,14mm | 6,2% | 4,1% |
| 3,14 < | < 5 mm | 13,8% | 11,2% |
| 5 < | < 10 mm | 25,2% | 25,4% |
| 10 < | < 20 mm | 35,6% | 35,9% |
| 20 < | < 40 mm | 12,9% | 13,9% |
| 40 < | < 60mm | 5,2% | 7,1% |
| 60 mm < | | 1,1% | 2,4% |

Les 135kg d'agent refroidissant qui n'ont pas subi ce test sont alors dans les deux cas A et B exposés dans un four d'agglomération pendant une durée de 5mn à une température comprise entre 950 et 1020°C.

On procède ensuite, 24 heures après pour chaque cas, à un test MICUM sur 15 kg de boulets qui ont subi le traitement thermique précédent.

Les résultats de ce second test sont exprimés dans le tableau 2 suivant :

**TABLEAU 2**

| SPECTRE GRANULOMETRIQUE | | PROPORTIONS EN POIDS | |
|---|---|---|---|
| | | Cas A | Cas B |
| | < 3,14mm | 28,4% | 17,3% |
| 3,14 < | < 5 mm | 34,6% | 20,1% |
| 5 < | < 10 mm | 17,9% | 43,6% |
| 10 < | < 20 mm | 9,4% | 10,1% |
| 20 < | < 40 mm | 8,9% | 3,9% |
| 40 < | < 60mm | 0,8% | 0% |
| 60 mm < | | 0% | 0% |

Ces résultats permettent donc de constater que l'adjonction de fibrilles d'acier inoxydable dans les boulets d'agent refroidissant réduit d'environ un tiers la proportion de fines c'est à dire de poussières de dimensions inférieures à 3,14mm, et améliore la cohésion des boulets.

L'adjonction de fibrilles métalliques de dimensions particulières permet donc, lors de l'enfournement des boulets dans le convertisseur, d'augmenter la cohésion de ceux-ci du fait de leur meilleure conductibilité thermique et ainsi de retarder le phénomène de désagrégation ce qui permet à une plus grande partie des boulets d'atteindre le bain de métal liquide et donc de participer au bilan thermique en jouant le rôle d'agent refroidissant.

## Revendications

1. Procédé de préparation d'un agent refroidissant contenant du fer pour l'affinage de l'acier dans un convertisseur d'aciérie, caractérisé en ce que ledit agent est formé de boulets élaborés à partir de boues grasses de laminoirs, et en ce que :
- on ajoute aux boues grasses de laminoirs extraites, de la chaux, du minerai de fer, des scories et des fibrilles métalliques afin d'obtenir un mélange dont la composition pondérale est la suivante :
. boues grasses : 55 à 93%
. chaux : 5 à 25%
. Fibrilles métalliques : 5 à 15%
. minerai de fer: 1 à 15%
. scories : 1 à 15%
- on laisse reposer ledit mélange sous abri en vue de l'extinction de la chaux,
- on homogénéise le mélange obtenu,
- on ajoute 4 à 10% de liant,
- et on compacte ledit mélange pour former les boulets.

2. Procédé selon la revendication 1, caractérisé en ce que les boulets ont une forme générale d'ellipsoïdes de longueur comprise entre 20 et 60 mm et d'épaisseur comprise entre 10 et 25 mm.

3. Procédé selon la revendication 1, caractérisé en ce que les fibrilles métalliques ont une longueur maximale d'environ 5mm et un diamètre moyen d'environ 0,3mm.

4. Procédé selon l'une quelconque des revendications 1 et 3, caractérisé en ce que les fibrilles métalliques sont des copeaux issus d'opérations d'usinage telles que le meulage.

5. Procédé selon l'une quelconque des revendications 1, 3 et 4, caractérisé en ce que les fibrilles métalliques contienent du fer.

6. Procédé selon la revendication 1, caractérisé en ce que la composition pondérale du mélange est de préférence la suivante :
. boues grasses : 76 à 80%
. chaux : 10 à 12%
. fibrilles métalliques : 7 à 12%
. minerai de fer : 1 à 6 %
. scories : 1 à 6 %

7. Procédé selon la revendication 1, caractérisé en ce que l'on ajoute de préférence 4 à 6% de liant.

8. Procédé selon la revendication 1, caractérisé en ce que le liant est choisi parmi la mélasse de canne, le lignosulfonate d'ammonium et le lignosulfonate de calcium.

9. Agent refroidissant contenant du fer élaboré par le procédé selon l'une quelconque des revendications 1 à 8, caractérisé en ce qu'il contient en poids :
- de 50 à 67% de fer
- de 8 à 18% de chaux
- moins de 0,2% de soufre
- moins de 7% de carbone
- moins de 10% de résiduels sous forme alcaline et minérale, le fer étant présent sous forme libre et sous forme d'oxydes.

## Patentansprüche

1. Verfahren zum Herstellen eines eisenhaltigen Kühlmittels zum Raffinieren von Stahl in einem Stahlkonverter, dadurch gekennzeichnet, daß das Mittel aus Kugeln gebildet ist, welche aus Fettschlämmen aus Walzwerken erschmolzen sind, und daß:
- man zu den herausgezogenen Fettschlämmen aus Walzwerken Kalk, Eisenerz, Schlacken und metallische Fibrillen hinzusetzt, um eine Mischung zu erhalten, deren gewichtsanalytische Zusammensetzung die folgende ist:
. Fettschlämme : 55 bis 93%
. Kalk : 5 bis 25%
. metallische Fibrillen : 5 bis 15%
. Eisenerz : 1 bis 15%
. Schlacken : 1 bis 15%
- man die Mischung unter Abschluß im Hinblick auf das Löschen des Kalkes ruhen läßt;
- man die erhaltene Mischung homogenisiert;
- man 4 bis 10% Bindemittel hinzufügt;
- man die Mischung verdichtet, um die Kugeln zu bilden.

2. Verfahren nach Anspruch 1, dadurch gekennzeichnet, daß die Kugeln eine allgemeine Form von Ellipsoiden haben, mit einer Länge, die zwischen 20 und 60 mm liegt, und einer Dicke, die zwischen 10 und 25 mm liegt.

3. Verfahren nach Anspruch 1, dadurch gekennzeichnet, daß die metallischen Fibrillen eine maximale Länge von ungefähr 5 mm und einen Durchmesser von ungefähr 0,3 mm haben.

4. Verfahren nach einem der Ansprüche 1 bis 3, dadurch gekennzeichnet, daß die metallischen Fibrillen Späne sind, die aus bearbeitenden Arbeitsgängen, so wie Schleifen, hervorgegangen sind.

5. Verfahren nach einem der Ansprüche 1, 3 und 4, dadurch gekennzeichnet, daß die metallischen Fibrillen Eisen enthalten.

6. Verfahren nach Anspruch 1, dadurch gekennzeichnet, daß die gewichtsanalytische Zusammensetzung der Mischung bevorzugt die folgende ist:
. Fettschlämme : 76 bis 80%
. Kalk : 10 bis 12%
. metallische Fibrillen : 7 bis 12%
. Eisenerz : 1 bis 6%
. Schlacken : 1 bis 6%

7. Verfahren nach Anspruch 1, dadurch gekennzeichnet, daß man bevorzugt 4 bis 6% Bindemittel hinzufügt.

8. Verfahren nach Anspruch 1, dadurch gekennzeichnet, daß das Bindemittel aus der Rohrmelasse, dem Ammoniumlignosulfat und dem Calciumlignosulfat ausgewählt wird.

9. Eisenhaltiges Kühlmittel, das durch ein Verfahren nach einem der Ansprüche 1 bis 8 erschmolzen worden ist, dadurch gekennzeichnet, daß es gewichtsmäßig enthält:
- 50 bis 67% Eisen
- 8 bis 18% Kalk
- weniger als 0,2% Schwefel
- weniger als 7 % Kohlenstoff
- weniger als 10 % Reststoffe in alkalischer und mineralischer Form, wobei das Eisen in freier Form und in Form von Oxiden vorliegt.

## Claims

1. Method for producing a ferruginous coolant for refining steel in a steelmaking converter, characterised by making the said coolant from briquettes produced from greasy sludges from rolling mills and by:
- adding lime, iron ore, cinders and metal fibres to the extracted greasy rolling mill sludges, so as to obtain a mixture having the following composition by weight:
. greasy sludges : 55 to 93%
. lime : 5 to 25%
. metal fibres : 5 to 15%
. iron ore : 1 to 15%
. cinders : 1 to 15%
- covering the mixture and leaving it to allow the lime to slake,
- homogenising the resulting mixture,
- adding 4 to 10% of binder,
- and compacting the mixture to form briquettes.

2. Method according to claim 1, characterised in that the briquettes have a generally ellipsoid shape with a length of between 20 and 60 mm and a thickness of between 10 and 25 mm.

3. Method according to claim 1, characterised in that the metal fibres have a maximum length of approximately 5 mm and an average diameter of approximately 0.3 mm.

4. Method according to any one of claims 1 to 3, characterised in that the metal fibres are slivers from machining operations such as grinding.

5. Method according to any one of claims 1, 3 and 4, characterised in that metal fibres contain iron.

6. Method according to claim 1, characterised in that the composition of the mixture by weight is preferably as follows:
. greasy sludges : 76 to 80%
. lime : 10 to 12%
. metal fibres : 7 to 12%
. iron ore : 1 to 6 %
. cinders : 1 to 6 %

7. Method according to claim 1, characterised by the addition of preferably 4 to 6% binder.

8. Method according to claim 1, characterised in that the binder is selected from cane molasses, ammonium lignosulphate and calcium lignosulphate.

9. Ferruginous coolant made by the method according to any one of claims 1 to 8, characterised by containing the following by weight:
- from 50 to 67% iron
- from 8 to 18% lime
- less than 0.2% sulphur
- less than 7% carbon
- less than 10% residues in alkaline and mineral form, the iron being present in free form and as oxides.
